Europäisches Patentamt

European Patent Office

Office européen des brevets

(19)

(11) Veröffentlichungsnummer: **0 249 094 B1**

# EUROPÄISCHE PATENTSCHRIFT

(12)

(45) Veröffentlichungstag der Patentschrift: **13.11.91**

(51) Int. Cl.⁵: **B02C 19/12**, B07B 9/00

(21) Anmeldenummer: **87107728.5**

(22) Anmeldetag: **27.05.87**

(54) **Verfahren und Anlage zur Aufbereitung von Verbundglasscheiben.**

(30) Priorität: **13.06.86 DE 3620027**

(43) Veröffentlichungstag der Anmeldung:
**16.12.87 Patentblatt 87/51**

(45) Bekanntmachung des Hinweises auf die
Patenterteilung:
**13.11.91 Patentblatt 91/46**

(84) Benannte Vertragsstaaten:
**BE DE FR GB IT**

(56) Entgegenhaltungen:
**DD-A- 218 313**
**FR-A- 2 329 599**
**FR-A- 2 356 457**
**US-A- 1 893 030**
**US-A- 4 406 411**

**SPRECHSAAL, Band 111, Nr. 11, November**
**1978, Seiten 700-707, Coburg, DE; "GLAS 78 -**
**Ein Schritt in die richtige Richtung ?"**

(73) Patentinhaber: **Zippe GmbH + Co**
**Alfred-Zippe-Strasse**
**W-6980 Wertheim(DE)**

(72) Erfinder: **Zippe, Alfred**
**Am Freiersgraben 10**
**W-6980 Wertheim(DE)**

(74) Vertreter: **Fuchs, Richard**
**Kantstrasse 18**
**W-8700 Würzburg(DE)**

**Beschreibung**

Die Erfindung bezieht sich auf ein Verfahren und eine Anlage zur Aufbereitung von Verbundglasscheiben, bestehend aus Glastafeln und wenigstens einer Kunststoff-Folie.

Verbundglasscheiben werden vor allem in Kraftfahrzeugen, aber auch als Gebäudeverglasungen in großen Mengen eingesetzt. Gebrauchte und als Abfall zu wertende Verbundglasscheiben fallen daher in ebenso großen Mengen an und man hat diese bisher in Deponien abgelagert, da eine Aufbereitung der Verbundglasscheiben zur Wiedergewinnung des Glas- und Kunststoff-Folien-Anteils bisher als unmöglich gilt.

Durch die Zeitschrift "Sprechsaal", Band 111, Nr. 11, November 1978 ist ein Verfahren zum Zerkleinern von Flachglas und zum Brechen von Drahtglas bekannt. Die Aufbereitung der Flachglasabfälle erfolgt durch Brechen in einem Vorbrecher mittels Brechwalzen und die vorgebrochenen Scherben werden dann in einem als Ringschlagbrecher ausgeführten Hauptbrecher weiter zerkleinert. Beim Brechen von Drahtglas erfolgt die Trennung von Glas und Draht dadurch, daß man einen Rost mit entsprechend kleinen Lochungen in den Ringschlagbrecher einbaut und unterhalb desselben zwei Magnettrommeln zur Abscheidung der Drahtteilchen anordnet. Zur Aufbereitung von Verbundglasscheiben, die aus Glastafeln und wenigstens einer Kunststoff-Folie bestehen, ist dieses Verfahren bzw. diese Anlage jedoch nicht geeignet. Flachglas und Drahtglas sind nämlich in bezug auf ihr Verhalten in einem maschinellen Zerkleinerungsvorgang nicht ohne weiteres vergleichbar mit den Obigen Verbundglasscheiben.

Der durch die US-A-1 893 030 bekannt gewordene Walzenbrecher eignet sich auch nur zum Brechen bzw. Zerschlagen von Drahtglas. Er weist zu diesem Zweck zwei aus zahlreichen Scheiben zusammengesetzte Walzen auf, die am Außenumfang zahlreiche Schlagringe tragen, welche geringfügig über den Umfang der Brechwalzen hervorstehen. In der Patentschrift ist ausdrücklich hervorgehoben, daß das Brechen des Drahtglases in der Hauptsache durch Schläge erfolgt, gegen welche das Drahtglas wenig widerstandsfest ist.

Der Erfindung liegt die Aufgabe zugrunde, ein Aufbereitungsverfahren für Verbundglasscheiben zu entwickeln, welches eine wirtschaftliche Trennung der Glas- und Kunststoff-Folien-Anteile solcher Scheiben ermöglicht, so daß das Glas und der Kunststoff in getrennten Mengen einer Wiederverwendung zugeführt werden können. Ferner soll eine Anlage zur Durchführung des Verfahrens geschaffen werden.

Obige Aufgabe wird gemäß der Erfindung durch ein Verfahren gelöst, das gekennzeichnet ist durch folgende Schritte:

a) Vorzerkleinerung der Verbundglasscheiben durch kombiniertes Brechen und Zerreißen unter gleichzeitiges Ausüben von Biegekräften sowie unterschiedlich gerichteten Zugkräften durch rotierende Reißzähne,

b) weiteres Zerkleinern der durch die Vorzerkleinerung erzielten Verbundglasscheibenstücke zu rieselfähigen Verbundglasscheibenteilchen,

c) Ausüben eines mechanischen Druckes auf die Verbundglasscheibenteilchen in der rieselfähigen Größe durch gegenläufig rotierende Brechwalzen, derart, daß sich die Verbundglasscheibenteilchen aufteilen in Glas- und Kunststoff-Folien-Teilchen und

d) Sieben und/oder Windsichten des Gemenges aus Glas- und Kunststoff-Folien-Teilchen zwecks Sortierung der Glasteilchen und Kunststoff-Folien-Teilchen, die dann in getrennten Mengen einer Weiterverwendung zuführbar sind.

Bei der Vorzerkleinerung der Verbundglasscheiben (Verfahrensschritt a) verkrallen sich die Reißzähne an den Seitenflächen der Verbundglasscheiben, biegen diese soweit durch, daß sie brechen und zerreißen schließlich die Kunststoff-Folie, welche die gebrochenen Scheibenteile zunächst noch zusammenhält. Dieses Brechen und Zerreißen der Scheiben erfolgt praktisch gleichzeitig. Dadurch werden die Verbundglasscheiben in Stücke von solcher Größe zerkleinert, daß man diese mittels üblicher Transportmittel zu der Stelle wirtschaftlich transportieren kann, an der der zweite Verfahrensschritt durchgeführt wird, um Verbundglasscheibenteilchen in rieselfähiger Größe zu erzielen. Die weitere Zerkleinerung der Verbundglasscheibenstücke zu rieselfähigen Verbundglasscheibenteilchen kann z.B. in einer shredderartigen Zerkleinerungseinrichtung durchgeführt werden. Die rieselfähigen Verbundglasscheibenteilchen werden dann durch gegenläufig rotierende Brechwalzen einem solch starken mechanischen Druck ausgesetzt, daß sie sich in Glas- und Kunststoff-Folien-Teilchen aufteilen. Hierbei handelt es sich um die sog. Press-Zerkleinerung der Verbundglasscheibenteilchen. Diese Material-Trennungsstufe erfordert relativ kleine Verbundglasscheibenteilchen, d.h. also, rieselfähige Korngrößen. In einem letzten Verfahrensschritt wird das Gemenge aus individuellen Glas- und Kunststoff-Folien-Teilchen einem Sieb- oder pneumatischen Sortiervorgang unterworfen, um je eine getrennte Menge von Glasteilchen und Kunststoff-Folien-Teilchen zu erhalten, welche schließlich in einer Glasschmelze bzw. bei der Kunststoffproduktion wieder verwendet werden können. Das erfindungsgemäße Verfahren ermöglicht auf wirtschaftliche Weise die Aufbereitung von gebrauchten Verbundglasscheiben und kann vorteilhaft mit relativ einfachen, hintereinander angeordneten Zerkleinerungs- und Preßeinrichtungen durchgeführt werden.

Eine relativ einfache Anlage zur wirtschaftlichen Durchführung des erfindungsgemäßen Verfahrens geht aus dem Anspruch 2 hervor. Der Materialtransport zwischen den einzelnen Aggregaten der Anlage kann durch übliche Fördermittel und/oder auch im freien Fall erfolgen. Die Anlage kann ferner durch Einrichtungen zur Staubentfernung und Ausscheidung metallischer Fremdkörper komplettiert werden.

Wenn die Reißzähne im Verbundglasscheiben-Reißbrecher nicht nur mit unterschiedlichen Drehzahlen, sondern nach Anspruch 3 auch in verschiedenen Drehrichtungen antreibbar sind, wird der von ihnen ausgehende Zerreißeffekt weiter verstärkt.

Eine bevorzugte Ausführungsform des Verbundglasscheiben-Reißbrechers ist dadurch gekennzeichnet, daß er mehrere parallel zueinander angeordnete Wellen aufweist, die an ihren Umfängen von Welle zu Welle in Achsrichtung versetzt angeordnete Reißzähne tragen, deren Umlaufbahnen sich gegenseitig überlappen und in geringem Abstand von den jeweils benachbarten Wellen verlaufen, wobei dieser Abstand mindestens etwa der größten Dicke der aufzubereitenden Verbundglasscheiben entspricht und zwischen den Reißzähnen relativ große Lücken vorgesehen sind.

Die weiteren Ausgestaltungen der Erfindung entsprechend den Ansprüchen 5 und 6 fördern zusätzlich den Brech- und Zerreiß-Effekt des Reißbrechers.

Wenn nach Anspruch 7 die die Reißzähne tragenden Wellen von der Seite betrachtet muldenförmig angeordnet sind, wird der Einzug der aufzubereitenden Verbundglasscheiben in den Reißbrecher verbessert.

Eine einwandfreie Aufteilung bzw. Trennung der Verbundglasscheibenteilchen in der rieselfähigen Größe in Glas- und Kunststoff-Folien-Teilchen wird mit einem Walzen-Brecher erreicht, der gemäß dem Anspruch 8 oder 9 ausgebildet ist. Der zur Aufteilung der Verbundglasscheibenteilchen erforderliche mechanische Druck wird hier zwischen speziellen Preßspalten erzeugt, die an einer Seite jeweils durch das konkav abgestumpfte freie Ende eines Drückzahns und an der anderen Seite durch ein Umfangsteil der benachbarten Welle begrenzt sind.

Die Erfindung wird anschließend anhand der Zeichnungen eines Ausführungsbeispiels erläutert Es zeigen:

Fig. 1     eine Seitenansicht einer Anlage zur Aufbereitung von Verbundglasscheiben;

Fig. 2     eine Draufsicht der in Fig. 1 gezeigten Anlage;

Fig. 3     eine Seitenansicht eines Teils des in der Anlage nach Fig. 1 eingebauten Reißbrechers zur Vorzerkleinerung der Verbundglasscheiben;

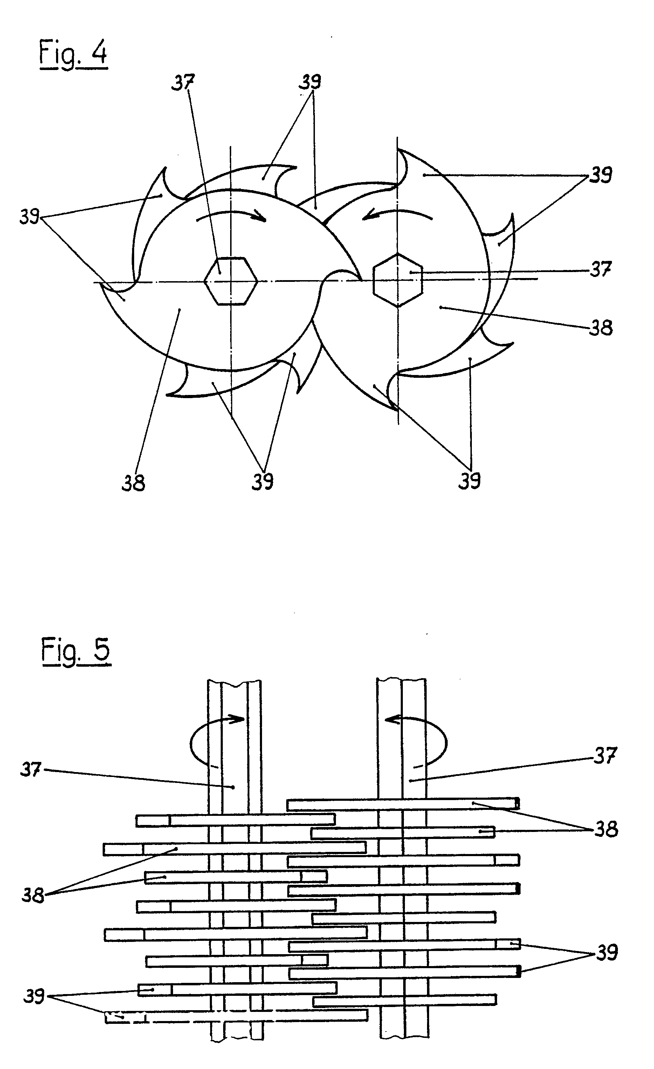

Fig. 4     eine Teil-Seitenansicht des in der Anlage nach Fig. 1 vorhandenen Shredders zur weiteren Zerkleinerung der Verbundglasscheibenstücke in rieselfähigen Teilchen;

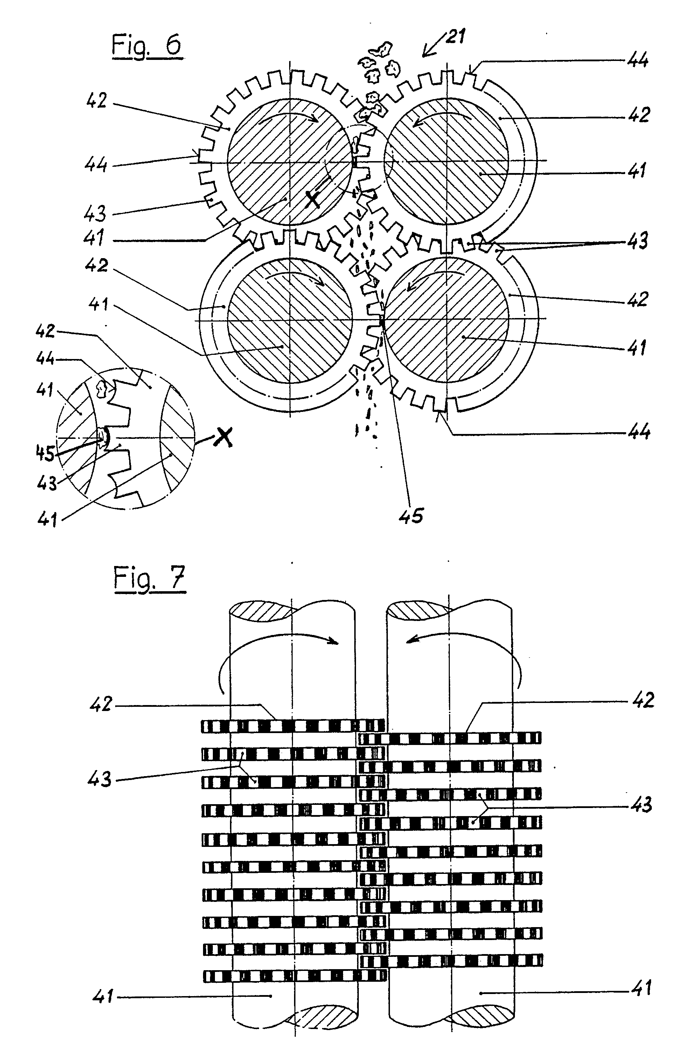

Fig. 5     eine Draufsicht des in Fig. 4 gezeigten Shredder-Teils;

Fig. 6     eine Teil-Seitenansicht eines in der Anlage nach Fig. 1 verwendeten Walzenbrechers zur "Preßzerkleinerung" der Verbundglasscheibenteilchen und

Fig. 7     eine Draufsicht auf den in Fig. 6 gezeigten Teil des Walzenbrechers.

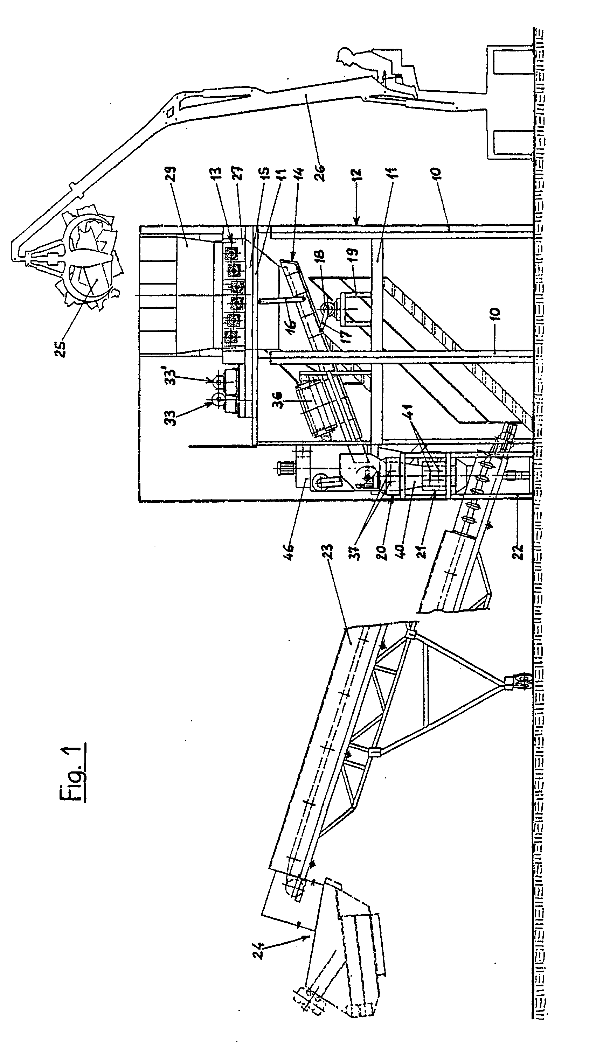

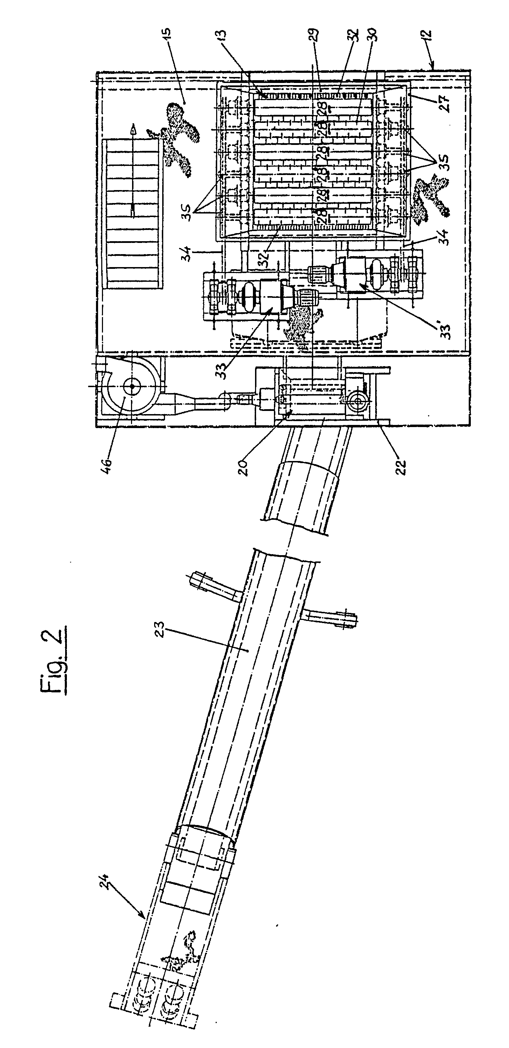

Die in den Figuren 1 und 2 gezeigte Anlage zur Aufbereitung von Verbundglasscheiben weist ein aus Stützen 10 und Riegeln 11 bestehendes Traggerüst 12 für einen Verbundglasscheiben-Reißbrecher 13 und eine Pendelförderrinne 14 auf. Der Reißbrecher 13 ist auf der begehbaren oberen Plattform 15 des Traggerüstes 12 angeordnet. Die Pendelförderrinne 14 ist mittels Schwingen 16 am Traggerüst 12 aufgehängt und wird durch einen Exzenter-Kurbeltrieb 17 betätigt, der seinerseits durch einen Elektromotor 18 angetrieben wird. Der Elektromotor 18 ist auf einem Gestell 19 befestigt, das sich auf dem Traggerüst 12 abstützt.

Mit der Bezugszahl 20 ist ein Shredder zur weiteren Zerkleinerung der durch den Reißbrecher 13 vorzerkleinerten und durch die Pendelförderrinne 14 zugeführten Verbundglasscheibenstücke in rieselfähige Teilchen bezeiohnet, dem ein zur sog. Preßzerkleinerung der rieselfähigen Teilchen bestimmter Walzenbrecher 21 nachgeordnet ist. Der Shredder 20 und der Walzenbrecher 21 sind übereinander an einem separaten Traggerüst 22 befestigt. Mit 23 ist ein Förderband bezeichnet, welches das aus dem Walzenbrecher 21 austretende Gemenge aus Glas-und Kunststoff-Folien-Teilchen zu einer pneumatischen Sortiervorrichtung 24 transportiert, in der die Glasteilchen von den Kunststoff-Folien-Teilchen separiert werden, so daß man zwei getrennte Mengen von Glas- und Kunststoff-Teilchen erhält, die einer Wiederverwen-dung in entsprechenden Produktionsanlagen zuge-führt werden können. Diese Sortiervorrichtung 24 ist von bekannter Bauart.

Die aufzubereitenden Verbundglasscheiben 25 werden von einem nicht gezeigten Haufen mittels einer Greifvorrichtung 26 dem Reißbrecher 13 zu-geführt, der die Verbundglasscheiben vorzerklei-nert. Der Reißbrecher 13 weist ein Unterteil 27 auf, an dem im Ausführungsbeispiel sechs Wellen 28 bzw. 28' parallel zueinander und von der Seite betrachtet (Fig.1 u.3) muldenförmig gelagert sind. Das Unterteil 27 des Reißbrechers 13 trägt eine Schute 29, durch welche jede Partie 25 von aufzubereitenden Verbundglasscheiben in den Reißbrecher 13 eingeführt wird.

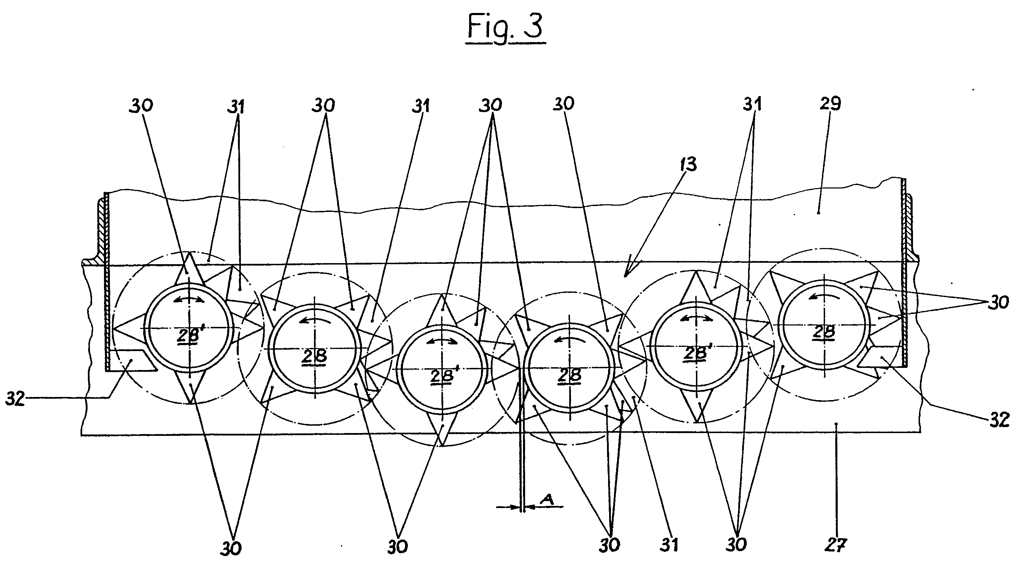

Die Wellen 28 bzw. 28' tragen an ihrem Umfang Scharen von dreieckförmigen Reißzähnen 30, die in Achsrichtung versetzt sind und deren Umlaufbahnen sich gegenseitig überlappen. Es wird auf Fig. 3 hingewiesen, welche diese Verhältnisse deutlich veranschaulicht und die auch zeigt, daß zwischen den Reißzähnen 30 auf jeder Welle relativ große Lücken 31 vorhanden sind. Die Verhältnisse sind ferner so, daß die Umlaufbahnen der Reißzähne 30 von der jeweils benachbarten Welle 28 bzw. 28' nur einen relativ geringen Abstand A aufweisen, der mindestens etwa der größten Dicke der aufzubereitenden Verbundglasscheiben entspricht. Die Zähne 30 an den beiden äußersten Wellen 28 und 28' laufen durch kammartige Abweiser 32, die am Unterteil 27 befestigt sind und ein Durchrutschen von Verbundglasscheiben-Stücken durch den Reißbrecher 13 verhindern.

Die drei Wellen 28 weisen einen eigenen Antriebsmotor 33 und die drei Wellen 28' einen eigenen Antriebsmotor 33' auf. Der Antrieb der drei Wellen 28 bzw. 28' erfolgt von den Motoren 33 bzw. 33' aus über Ketten 34 und Kettenräder 35. Die drei Wellen 28 werden beim Ausführungsbeispiel mit einer höheren Drehzahl angetrieben als die drei übrigen Wellen 28'. Außerdem werden die drei Wellen 28' beim Ausführungsbeispiel abwechselnd in beiden Drehrichtungen angetrieben, wie dies durch die Pfeile in Fig. 3 veranschaulicht ist. Durch obige Maßnahmen erreicht man, daß ein zwischen die Zähne 30 benachbarter Wellen 28, 28' gelangendes Verbundglasscheibenstück so stark mehrfach gebogen wird, daß es in zahlreiche Stücke zerbricht, wobei die Spitzen der Reißzähne 30 sich an den Seitenflächen der Verbundglasscheibenstücke einkrallen. Aufgrund der unterschiedlichen Drehzahlen und Drehrichtungen der Reißzähne 30 an benachbarten Wellen 28, 28' greifen gleichzeitig unterschiedlich gerichtete Zugkräfte an den Seitenflächen der Verbundglasscheibenstücke an, die ein Zerreißen der die Glastafelstücke zunächst noch zusammenhaltenden Kunststoff-Folie bewirken. Auf diese Weise erfolgt eine Vorzerkleinerung der Verbundglasscheiben in relativ kleinere Stücke, die nach dem Verlassen des Reißbrechers 13 von der Pendelförderrinne 14 dem Shredder 20 zugeführt werden. Im Bereich der Pendelförderrinne 14 ist ein Magnetbandscheider 36 angeordnet, der evtl. vorhandene metallische Fremdkörper aus dem vorzerkleinerten Material entfernt.

Die von der Pendelförderrinne 14 in den Shredder 20 transportierten Verbundglasscheibenstücke werden in dem Shredder zu rieselfähigen Teilchen zerkleinert. Der Shredder 20 enthält zu diesem Zweck zwei gegenläufig angetriebene Wellen 37, auf denen in Achsrichtung versetzt zahlreiche Scheiben 38 befestigt sind, die an ihren Umfängen jeweils eine Reihe von Schneidzähnen 39 tragen. Durch diese gegenläufig angetriebenen Schneidzähne 39 werden die Verbundglasscheibenstücke auf die erforderliche rieselfähige Größe zerkleinert. Die den Shredder 20 verlassenden rieselfähigen Verbundglasscheibenteilchen gelangen im freien Fall durch einen Schacht 40 in den Walzenbrecher 21, in dem die Verbundglasscheibenteilchen durch gegenläufig angetriebene Brechwalzen 41 von einer noch zu beschreibenden besonderen Konstruktion einem so stark mechanischem Druck unterworfen werden, daß sie sich in Glas- und Kunststoff-Folien-Teilchen aufspalten bzw. trennen.

Der Walzenbrecher 21 enthält vier spezielle Brechwalzen 41, die gegenläufig angetrieben werden und eine Reihe von in Achsrichtung versetzt angeordnete Ringe 42 tragen. An den Umfängen dieser Ringe 42 sind eng benachbart Drückzähne 43 angeordnet, die konkav abgestumpfte freie Enden 44 aufweisen. Die konkav abgestumpften freien Enden 44 der Drückzähne 43 begrenzen nacheinander mit einem Umfangteil der jeweils benachbarten Walze 41 jeweils einen Preßspalt 45, in dem die Verbundglasscheibenteilchen so stark gepresst werden, daß sie sich, wie schon erwähnt, in ihre Glas-und Kunststoff-Folien-Anteile aufspalten. Die die Druckzähne 43 tragenden Ringe 42 sind so eng benachbart angeordnet, daß die Verbundglasscheibenteilchen nur durch die Preßspalten 45 hindurch nach unten gelangen können.

Das den Walzenbrecher 21 unten verlassende Gemenge aus individuellen Glas- und Kunststoff-Folien-Teilchen fällt auf das Förderband 23 und wird von diesem zur pneumatischen Sortiervorrichtung 24 transportiert. Diese Sortiervorrichtung 24 kann aus einer bekannten Ausführung bestehen, die die Glasteilchen von den Kunststoff-Teilchen trennt.

Da während des Betriebs der Anlage zur Aufbereitung von Verbundglasscheiben große Staubmengen auftreten, ist zweckmäßig ein Staubfilter 46 in der Anlage angeordnet, dessen Absaugeinrichtung neben dem Shredder 20 und dem Walzenbrecher 21 angeordnet ist.

**Patentansprüche**

1. Verfahren zur Aufbereitung von Verbundglasscheiben, bestehend aus Glastafeln und wenigstens einer Kunststoff-Folie, gekennzeichnet durch folgende Schritte:

   a) Vorzerkleinerung der Verbundglasscheiben durch kombiniertes Brechen und Zerreißen unter gleichzeitigem Ausüben von Biegekräften sowie unterschiedlich gerichteten Zugkräften durch rotierende Reißzähne,

b) weiteres Zerkleinern der durch die Vorzerkleinerung erzielten Verbundglasscheibenstücke zu rieselfähigen Verbundglasscheibenteilchen,

c) Ausüben eines mechanischen Druckes auf die Verbundglasscheibenteilchen in der rieselfähigen Größe durch gegenläufig rotierende Brechwalzen, derart, daß sich die Verbundglasscheibenteilchen aufteilen in Glas- und Kunststoff-Folien-Teilchen und

d) Sieben und/oder Windsichten des Gemenges aus Glas- und Kunststoff-Folien-Teilchen zwecks Sortierung der Glasteilchen und Kunststoff-Folien-Teilchen, die dann in getrennten Mengen einer Weiterverwendung zuführbar sind.

2. Anlage zur Durchführung des Verfahrens nach Anspruch 1, gekennzeichnet durch:

a) einen Verbundglasscheiben-Reißbrecher (13), der Scharen von um mehrere parallelen Achsen und mit unterschiedlichen Drehzahlen rotierende Reißzähnen (30) aufweist, zwischen denen die Verbundglasscheiben gebrochen und zerrissen werden,

b) einen dem Reißbrecher (13) in Flußrichtung des aufzubereitenden Materials nachgeordneten Shredder (20) zur Erzeugung der rieselfähigen Verbundglasscheibenteilchen,

c) einen dem Shredder (20) in Flußrichtung des aufzubereitenden Materials nachgeordneten Walzenbrecher (21) und

d) eine in Flußrichtung des aufzubereitenden Materials dem Walzenbrecher (21) nachfolgende pneumatische Sortiervorrichtung (24) zur Erzeugung getrennter Mengen von Glas- und Kunststoff-Folien-Teilchen.

3. Anlage nach Anspruch 2, dadurch gekennzeichnet, daß die Reißzähne (30) im Reißbrecher (13) in verschiedenen Drehrichtungen antreibbar sind.

4. Anlage nach Anspruch 2, dadurch gekennzeichnet, daß der Verbundglasscheiben-Reißbrecher (13) mehrere parallel zueinander angeordnete Wellen (28, 28') aufweist, die an ihren Umfängen von Welle zu Welle in Achsrichtung versetzt angeordnete Reißzähne (30) tragen, deren Umlaufbahnen sich gegenseitig überlappen und in geringem Abstand (A) von den jeweils benachbarten Wellen (28, 28') verlaufen, wobei dieser Abstand (A) mindestens etwa der größten Dicke der aufzubereitenden Verbundglasscheiben entspricht und zwischen den Reißzähnen (30) relativ große Lücken (31) vorgesehen sind.

5. Anlage nach Anspruch 2, 3 oder 4, dadurch gekennzeichnet, daß die Reißzähne (30) dreieckförmig ausgebildet sind.

6. Anlage nach Anspruch 4, dadurch gekennzeichnet, daß von den Wellen (28, 28') des Reißbrechers (13) jede zweite (28') mit einer gegenüber den übrigen Wellen (28) unterschiedlichen Drehzahl angetrieben wird und jede zweite Welle (28') des Reißbrechers (13) abwechselnd in eine der beiden Drehrichtungen antreibbar ist.

7. Anlage nach einem der Ansprüche 2 - 6, dadurch gekennzeichnet, daß die die Reißzähne (30) tragenden Wellen (28, 28') von der Seite betrachtet muldenförmig angeordnet sind.

8. Anlage nach Anspruch 2, dadurch gekennzeichnet, daß der Walzenbrecher (21) wenigstens zwei gegenläufig angetriebene Brechwalzen (41) aufweist, die an ihren Umfängen Drückzähne (43) tragen, welche mit ihren konkav abgestumpften freien Enden (44) mit der jeweils anderen (gegenüberliegenden) Walze (41) Preßspalten (45) bilden, in denen die Verbundglasscheibenteilchen zusammengedrückt und in Glas- und Kunststoff-Folien-Teilchen getrennt werden.

9. Anlage nach Anspruch 8, dadurch gekennzeichnet, daß die Brechwalze (41) in Achsrichtung versetzt angeordnete Ringe (42) tragen, die an ihren Umfängen die Drückzähne (43) aufweisen, und daß die Ringe (42) eng benachbart angeordnet sind.

## Claims

1. A method of processing laminated glass panels comprising glass panes and at least one plastics foil, characterised by the following steps:

a) preliminary reduction of the laminated glass panels by combined breaking and ripping, with the simultaneous application of bending forces and variously-oriented tractional forces by means of rotating ripper teeth;

b) further reduction of the fragments of laminated glass produced by preliminary breaking into pourable laminated glass particles;

c) application of a mechanical pressure to the laminated glass particles when in the pourable size by means of contrarotating toothed rollers, in such a way that the laminated glass particles separate into glass and plastics particles, and

d) screening and/or air separation of the conglomerate of glass and plastics foil particles in order to sort the glass particles and plastics foil particles, which may then be progressed separately for re-use.

2. An installation for carrying out the method according to Claim 1, characterised by:

a) a laminated glass panel ripper breaker (13) having groups of ripper teeth (30) rotating around several parallel axes and at different rotational speeds, between which the laminated glass panels are broken and torn;

b) a shredder (20) disposed after the ripper breaker (13) in the flow direction of the material to be processed, in order to produce the pourable laminated glass particles;

c) a roller breaker (21) disposed after the shredder (20) in the flow direction of the material to be processed, and

d) a pneumatic sorting device (24) disposed after the roller breaker (21) in the flow direction of the material to be processed, in order to produce separate masses of glass particles and plastics foil particles.

3. An installation according to Claim 2, characterised in that the ripper teeth (30) in the ripper breaker (13) are drivable in different rotational directions.

4. An installation according to Claim 2, characterised in that the laminated glass panel ripper breaker (13) has several shafts (28, 28') disposed parallel to one another, which carry on their circumferences, offset from shaft to shaft in an axial direction, ripper teeth (30), whose rotational paths mutually overlap and extend at a small spacing (A) from the respectively adjacent shafts (28, 28'), this spacing (A) corresponding at least roughly to the largest thickness of the laminated glass panels for processing, relatively large gaps (31) being provided between the ripper teeth (30).

5. An installation according to Claim 2, 3 or 5, characterised in that the ripper teeth (30) are triangular in form.

6. An installation according to Claim 4, characterised in that alternate shafts (28') of the shafts (28, 28') of the ripper breaker (13) are driven at a rotational speed different from that of the other shafts (28), and every second shaft (28') of the ripper breaker (13) is alternately drivable in one of the two rotational directions.

7. An installation according to one of Claims 2 - 6, characterised in that the shafts (28, 28') carrying the ripper teeth (30) are arranged in a trough shape, seen from the side.

8. An installation according to Claim 2, characterised in that the roller breaker (21) has at least two contrarotating breaker rollers (41) which carry on their circumferences pressure teeth (43) which form, with their concave truncated free ends (44), with the respective other (opposite) roller (41) pressure slots (45), in which the laminated glass particles are compressed and separated into glass particles and plastics foil particles.

9. An installation according to Claim 8, characterised in that the breaker rollers (41) carry rings (42) offset in an axial direction, which have on their circumferences the pressure teeth (43), and that the rings (42) are disposed close together.

**Revendications**

1. Procédé pour le traitement de vitres de verre feuilleté, constituées de panneaux de verre et d'au moins une feuille de matière plastique, caractérisé par les étapes suivantes :

(a) prébroyage des vitres de verre feuilleté par rupture et déchirure combinées avec exercice simultané de forces de flexion ainsi que de forces de traction de directions différentes au moyen de dents de déchirure tournantes,

(b) poursuite du broyage des morceaux de vitres de verre feuilleté obtenus par le prébroyage, pour donner des petits morceaux de vitres de verre feuilleté pouvant s'écouler,

(c) exercice d'une pression mécanique sur les petits morceaux de vitres de verre feuilleté, qui ont une taille leur permettant de s'écouler, au moyen de cylindres de concassage tournant en sens inverses, de façon telle que les petits morceaux de vitres de verre feuilleté se dédoublent en petits morceaux de verre et en petits morceaux de feuilles de matière plastique, et

(d) criblage et/ou blutage du mélange de petits morceaux de verre et de petits morceaux de feuilles de matière plastique dans le but de trier les petits morceaux de verre et les petits morceaux de feuilles de matière plastique, que l'on peut alors envoyer en masses distinctes, vers un réemploi.

2. Installation pour la mise en oeuvre du procédé selon la revendication 1, installation caractérisée par :

    (a) un prébroyeur (13) de vitres de verre feuilleté, qui présente des groupes de dents (30) de prébroyage tournant autour de plusieurs axes parallèles et à nombre de dents différent, entre lesquelles les vitres de verre feuilleté sont broyées et déchirées,

    (b) un déchiqueteur (20), disposé en aval du prébroyeur (13) (dans le sens du flux du matériau à traiter), pour donner des petits morceaux de vitres de verre feuilleté pouvant s'écouler,

    (c) un concasseur (21) à cylindres, disposé en aval du déchiqueteur (20), dans le sens du flux du matériau à traiter, et

    (d) un dispositif (24) de tri pneumatique en aval du concasseur (21) à cylindres, dans le sens du flux du matériau à traiter, pour donner des masses distinctes de petits morceaux de verre et de petits morceaux de feuilles de matière plastique.

3. Installation selon la revendication 2, caractérisée par le fait que l'on peut faire tourner les dents (30) de prébroyage (30) du prébroyeur (13) dans des sens différents de rotation.

4. Installation selon la revendication 2, caractérisée par le fait que le prébroyeur (13) de vitres de verre feuilleté présente plusieurs arbres (28, 28'), qui sont disposés parallèlement l'un à l'autre et qui portent, à leur périphérie, des dents (30) de prébroyage, qui sont disposées décalées d'arbre en arbre dans la direction axiale, dont les chemins périphériques parcourus se recouvrent mutuellement et qui passent à faible distance (A) des arbres (28, 28') respectivement voisins, étant précisé que cette distance (A) correspond au moins à peu près à la plus grande épaisseur des vitres de verre feuilleté à traiter et qu'entre les dents (30) de prébroyage sont prévus des entredents (31) relativement grands.

5. Installation selon la revendication 2, 3 ou 4, caractérisée par le fait que les dents (30) de prébroyage sont de forme triangulaire.

6. Installation selon la revendication 4, caractérisée par le fait que, parmi les arbres (28, 28') du prébroyeur (13), un (28') sur deux est entraîné à une vitesse de rotation différente de celle des autres arbres (28) et que, de même, un (28') sur deux arbres du prébroyeur (13) peut être alternativement entraîné dans l'un des deux sens de rotation.

7. Installation selon l'une des revendications 2 à 6, caractérisée par le fait que les arbres (28, 28'), qui portent les dents (30) de prébroyage sont disposés en forme d'auge, quand on les regarde de côté.

8. Installation selon la revendication 2, caractérisée par le fait que le concasseur (21) à cylindres présente au moins deux cylindres (41) de concassage, qui sont entraînés en sens opposé et qui portent, sur leur périphérie, des dents (43) de compression,qui, par leurs extrémités libres (44) pointées en forme concave, forment, avec l'autre cylindre (41) respectif (situé en face), des intervalles (45) de compression, dans lesquels les petits morceaux de vitres de verre feuilleté sont comprimés et séparés en petits morceaux de verre et petits morceaux de feuilles de matière plastique.

9. Installation selon la revendication 8, caractérisée par le fait que les cylindres (41) de concassage portent des anneaux (42), qui sont disposés décalés en direction axiale et qui présentent à leur périphérie les dents (43) de compression, et par le fait que les anneaux (42) sont disposés en étant étroitement voisins.

Fig. 1

EP 0 249 094 B1

Fig. 2

Fig. 3

## Fig. 4

## Fig. 5

Fig. 6

Fig. 7